(19) Europäisches Patentamt / European Patent Office / Office européen des brevets

(11) **EP 3 027 863 B1**

(12) **FASCICULE DE BREVET EUROPEEN**

(45) Date de publication et mention
de la délivrance du brevet:
**15.05.2019 Bulletin 2019/20**

(21) Numéro de dépôt: **14745132.2**

(22) Date de dépôt: **30.07.2014**

(51) Int Cl.:
***F02B 37/18*** *(2006.01)*

(86) Numéro de dépôt international:
**PCT/EP2014/066385**

(87) Numéro de publication internationale:
**WO 2015/014896 (05.02.2015 Gazette 2015/05)**

(54) **ACTIONNEUR ÉLECTROMAGNÉTIQUE DESTINÉ NOTAMMENT AU PILOTAGE D'UNE SOUPAPE DE DÉCHARGE POUR TURBOCOMPRESSEUR**

ELEKTROMAGNETISCHER AKTUATOR INSBESONDERE ZUR ANSTEUERUNG EINES TURBOKOMPRESSORENTLASTUNGSVENTILS

ELECTROMAGNETIC ACTUATOR FOR CONTROLLING THE WASTE GATE OF A TURBOCHARGER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2013 FR 1357597**

(43) Date de publication de la demande:
**08.06.2016 Bulletin 2016/23**

(73) Titulaire: **Sonceboz Automative SA
2605 Sonceboz (CH)**

(72) Inventeur: **MELLERE, Cédric
F-25190 Soulce Cernay (FR)**

(74) Mandataire: **IP Trust
2, rue de Clichy
75009 Paris (FR)**

(56) Documents cités:
**EP-A1- 1 432 106      US-A- 3 242 365
US-A1- 2006 244 330   US-A1- 2011 240 893**

EP 3 027 863 B1

# Description

Domaine de l'invention

La présente invention concerne le domaine des actionneurs électromagnétiques rotatifs destinés notamment au pilotage d'une soupape de décharge pour turbocompresseur de moteurs à combustion interne, communément appelée «Waste Gate».

L'invention porte plus spécifiquement sur les actionneurs électriques utilisés pour piloter cette vanne de décharge et réguler ainsi la pression des gaz dans la turbine du turbocompresseur.

Les moteurs thermiques (pour véhicule automobile, camion, engin de chantier...) fonctionnent grâce à l'explosion d'un mélange air / carburant dans la chambre de combustion des cylindres.

La boucle d'air du moteur, dont la fonction est l'acheminement, la gestion et l'évacuation de l'air alimentant le moteur, fonctionne à l'aide de différentes vannes. Pour améliorer les performances du moteur thermique, certains véhicules sont équipés de turbocompresseur dont le rôle est de suralimenter en air la chambre de combustion.

Ces dispositifs de suralimentation sont généralement équipés d'éléments mobiles (géométrie variable à pales et couronne rotatives, wastegate à clapet rotatif,...) contrôlant le fonctionnement et l'effet des turbocompresseurs en fonction du régime moteur et de la charge perçue. Ces éléments mécaniques mobiles sont mis en mouvement par des actionneurs (pneumatiques et électriques principalement) pilotés par l'ordinateur de bord du véhicule.

Les éléments mécaniques mobiles du turbocompresseur se trouvant dans le flux des gaz d'échappement sortant de la chambre de combustion, ils sont soumis à des variations de pression induisant des efforts résultants dont l'amplitude et la fréquence dépendent directement du régime de fonctionnement du moteur thermique.

Les actionneurs pilotés par l'ordinateur de bord du véhicule et mettant en mouvement ces éléments mobiles doivent être dimensionnés pour :

- Entraîner à tout instant l'élément mobile à la position désirée (quelle que soit la température et la charge à vaincre)

- Etre capable d'atteindre cette position cible dans un laps de temps généralement très court (env. 100 ms) pour garantir un fonctionnement optimal du turbo

- Maintenir cette position de manière stable avec une consommation de courant la plus faible possible.

Etat de la technique

On connaît dans l'état de la technique le brevet allemand DE102011051560 décrivant un exemple connu de soupape de décharge pour turbocompresseur On connaît aussi le brevet WO2013017794, décrivant un ensemble compact de positionnement comprenant un actionneur et un capteur intégré dans la culasse de l'actionneur.

Le brevet allemand DE102011078907 décrit un autre exemple de vanne de contrepression d'échappement pour le contrôle de la pression du flux de gaz d'échappement.

Les brevets EP1804366 et US5828151 décrivent d'autres exemples d'actionneurs rotatifs électromagnétiques.

On connait aussi, dans l'état de la technique, des machines électriques avec des guidages par friction tel que décrit dans le brevet US2006244330. Cette machine tournante comporte entre sa partie fixe et sa partie mobile des éléments de guidages pouvant se présenter sous la forme de paliers annulaires mais également sous la forme de palier de friction ou encore sous la forme de roulement. Ces éléments de guidage ne sont pas précisément décrits dans le brevet et l'homme du métier comprend que leur seul rôle se limite à autoriser la rotation relative de l'élément mobile par rapport à l'élément fixe de la machine avec la friction la plus faible possible, pour limiter au maximum les pertes mécaniques et obtenir des rendements élevés. Ces éléments de guidages n'apportent aucune fonction de filtration mécanique des éventuelles perturbations extérieures appliquées sur l'élément mobile.

On connait par ailleurs le brevet US2011240893 dans lequel est décrit un actionneur de vanne ayant un palier plastique. Un moyeu ferromagnétique intègre des formes spécifiques recevant du plastique sous forme de rondelles trouées permettant de recevoir l'axe du moteur. Le plastique utilisé pour ces rondelles doit être avec un bas coefficient de frottement, préférablement avec du nylon dans le but de réduire l'effet de collage entre la partie fixe et la partie mobile de l'actionneur, notamment quand les éléments lubrifiants ne sont plus présents pour assurer cette fonction. Les rondelles plastiques à faible coefficient de friction assurent ici uniquement une fonction de mise en position et de guidage de l'axe avec pour objectif de réduire les pertes mécaniques en ayant recours à une solution économique. Cette solution ne permet pas de compenser et de filtrer d'éventuelles vibrations ou perturbations de la position de l'élément mobile. Dans ce brevet, les rondelles plastiques ont avant tout une fonction radiale pour le maintien de l'axe et non axiale.

De même l'on connait des actionneurs tels que présentés dans le brevet EP1432106 où un palier formé avec un matériau magnétique doux est fixé au stator et dans lequel traverse une partie de l'axe du rotor. Ce palier est préférablement réalisé au moyen d'un matériau magnétique doux présentant autant que possible des forces de frictions faibles. Une des caractéristiques de la matière utilisée pour réaliser ce palier est également de prévenir l'adsorption suite aux forces magnétiques générées entre le stator et le rotor dans le but de préserver leurs caractéristiques rotationnelles et d'améliorer la durabilité. Le rôle de ces paliers est ici de limiter les phénomènes d'usures ou de pertes mécaniques en ayant recours à des matières compatibles avec le magnétisme de l'actionneur et limitant les phénomènes de frottement. Cette solution ne permet pas d'amortir et de supprimer les perturbations extérieures pouvant agir sur la position de l'actionneur.

On connait également le brevet US3242365 décrivant un système de contrôle de la génération de tension intégrant un système d'amortissement des oscillations du stator mobile. Ce système d'amortissement introduit de la friction par l'intermédiaire d'un ressort en forme d'assiette creuse (rondelle belleville) mise en contrainte entre une rondelle de friction et le stator. Le système d'amortissement peut également se présenter sous la forme d'une lame ressort en contact sur le stator ou tout autre moyen d'amortissement tel que des graisses lourdes ou patin de friction. Le système d'amortissement repose ici sur la friction mais il nécessite ici un moyen élastique de mise en contrainte pour obtenir l'effet d'amortissement souhaité. On doit donc intégrer des éléments couteux, encombrants et difficiles à maitriser pour une application d'amortissement tels que des ressorts types « rondelle belleville », des lames élastiques de frottement, ou des patins qu'il convient d'activer ou de mettre en contrainte via des éléments élastiques. L'utilisation de graisse lourde est également non pertinente car d'une part l'effet d'amortissement va dépendre de la vitesse des perturbations (des perturbations lentes à faible vitesse ne seront pas supprimées par un fluide tel que les graisses) et d'autre part la graisse a tendance à lubrifier les surfaces donc à réduire voir annuler le frottement des surfaces en contact, donc réduire l'amortissement par frottement.

Inconvénients de l'art antérieur

Les systèmes de suralimentation pour moteur thermique permettent d'augmenter les performances en augmentant la pression de l'air admis dans la chambre de combustion.

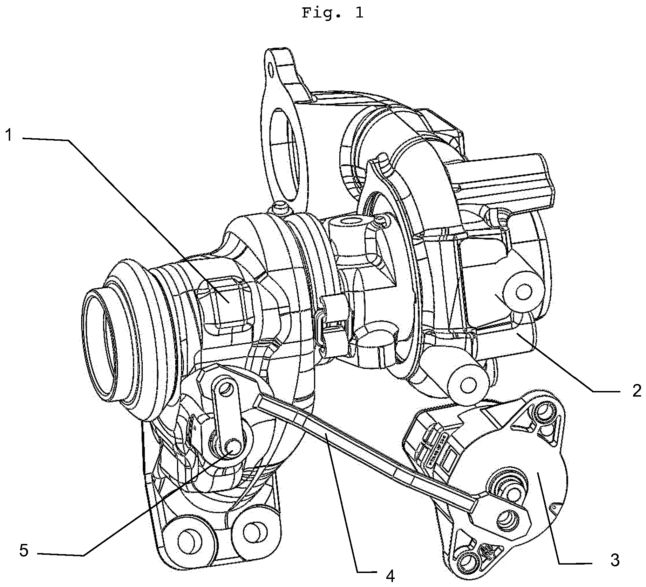

Comme le montre la Figure 1 illustrant le fonctionnement général d'un turbocompresseur de type « wastegate » de l'art antérieur, les turbocompresseurs se composent :

- d'une partie « Turbine » (1) : la turbine est entraînée en rotation par le passage des gaz d'échappement.

- d'une partie « compresseur » (2) : le compresseur est mécaniquement entrainé en rotation par la turbine d'échappement (les 2 sont reliés par un axe), c'est lui qui suralimente en air la chambre de combustion

- d'un élément mobile (5) : il permet de contrôler la vitesse de rotation de la turbine (donc le niveau d'action du compresseur) : quand il est activé, une partie des gaz d'échappement court-circuite la turbine sans agir pour sa mise en rotation

- d'un actionneur (3) : il pilote la position de l'élément mobile de la partie turbine

- d'une liaison cinématique (4) : elle transmet les mouvements (position et effort) de l'actionneur (3) vers l'élément mobile (5).

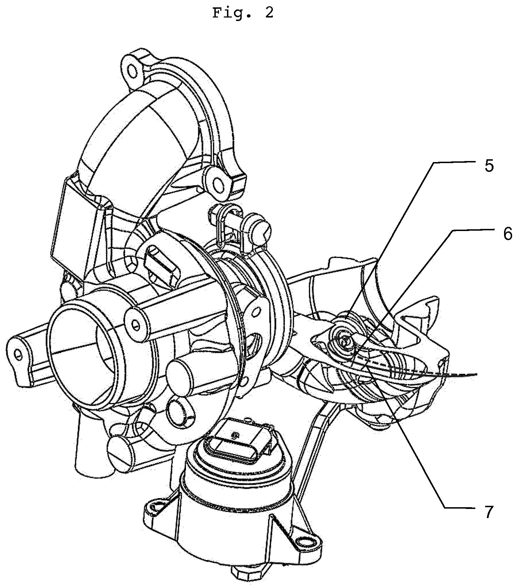

Comme on le voit sur la Figure 2, l'élément mobile (5) est soumis à deux types d'efforts résultant de l'action des gaz :

- Un effort constant illustré par la flèche (7) : son amplitude dépend du degré d'ouverture et du niveau de pression des gaz agissant sur l'élément mobile (5), mais l'amplitude reste constante dans le temps. Les ordres de grandeurs sont de 2bar environ.

- Un effort variable, illustré par la flèche (6) de type excitation de forme sinusoïdale, dont la fréquence dépend directement du régime moteur (chaque cycle d'ouverture d'une soupape d'échappement induisant un pic de pression). Les ordres de grandeurs sont de $\pm0.45$bar sur une plage de fréquence [20Hz ; 200Hz].

Ces efforts perturbent le fonctionnement des actionneurs connus dans l'art antérieur, notamment lors de régulation de la position en boucle fermée.

L'état actuel de la technique présente de nombreuses solutions d'actionneurs où l'élément mobile est guidé et déplacé relativement à l'élément fixe par l'intermédiaire de système à frottement. La majorité des solutions ont pour but de limiter au maximum les pertes par frottement en ayant recours à des matières et des formes spécifiques. Les quelques solutions portant sur l'amortissement d'oscillation par la friction sont non pertinentes par manque de performance ou par la complexité et la difficulté de mise en place et de réalisation dans des encombrements réduits tels que l'actionneur décrit dans la présente invention.

Solution apportée par l'invention

Les actionneurs de l'art antérieur (actionneur linéaire ou moteur couple) représentent une solution particulièrement bien indiquée pour les applications exigeantes telles que les turbocompresseurs de suralimentation. Les caractéristiques principales sont la compacité, la robustesse et une haute dynamique..

Comme c'est une solution à entrainement direct (pas de réduction de mouvement type engrenages ou autres entre le rotor et l'axe de sortie de l'actionneur), elle est très rapide mais est exposée en contrepartie à toutes les perturbations de la charge qu'elle pilote. Sa faible raideur l'expose donc à de possibles phases d'instabilité en pilotage «boucle fermée», notamment pour des excitations hautes fréquences.

La solution développée consiste à intégrer directement dans l'actionneur un système mécanique d'amortissement apte à filtrer les excitations hautes fréquences subies par le moteur couple. On conserve ainsi les avantages significatifs de ce type d'actionneur (compacité, robustesse, dynamique) et on supprime le risque d'instabilité en ajoutant de la raideur à l'actionneur.

Les actionneurs électromagnétiques conformes à l'invention sont aptes à piloter les éléments mobiles de turbocompresseurs, en garantissant une stabilité efficace du maintien en position avec une consommation de courant réduite de l'actionneur. L'idée consiste à introduire dans l'actionneur un élément filtrant les excitations hautes fréquences perceptibles par l'actionneur.

Il est à noter que le système d'amortissement de l'invention n'a pas vocation à guider l'élément mobile, il a notamment, particulièrement dans une réalisation rotative comme décrite dans les figures, un rôle de maintien axial et non de guidage radial. Il est donc directement soumis à des efforts et charges axiales de compression, résultants de l'attraction magnétique entre l'élément mobile et l'élément fixe et doit résoudre ainsi une problématique de fluage : sa matière et son dimensionnement doivent être judicieusement étudiés et choisis (notamment en fonction des températures d'utilisation et des sollicitations mécaniques) afin d'éviter tout risque de tassement qui dégraderait ainsi les caractéristiques et performances de l'actionneur objet de la présente invention. Les matières plastiques et intégrations conventionnelles présentées dans l'état de la technique ne sont pas suffisantes pour prévenir cette défaillance.

Dans le cas d'une réalisation rotative, l'association d'une rondelle butée ayant le rôle d'amortissement à un moteur couple est extrêmement pertinente vue le fonctionnement de l'actionneur et le choix judicieux de l'endroit où elle est intégrée : aucun besoin de moyen élastique de mise en contrainte, le couple de maintien est supérieur au couple perturbateur grâce à l'effet « collé-glissé » et grâce à la caractéristique de l'actionneur (effort minimum en début de course sous l'effet du champ des bobines, donc déplacement facile à initier).

A cet effet, l'invention concerne selon son acception la plus générale un actionneur électromagnétique destiné notamment au pilotage d'une soupape de décharge pour turbocompresseur, ledit actionneur comportant un organe fixe formé d'un premier circuit magnétique statorique réalisé en un matériau de haute perméabilité magnétique excité par au moins une bobine d'excitation, et un organe mobile constitué par une pièce mince, ladite pièce mince aimantée étant accolée à un second circuit magnétique réalisé en un matériau de haute perméabilité magnétique, ledit organe mobile étant muni d'un axe d'accouplement, lesdits organes fixe et mobile étant attirés l'un contre l'autre sous l'effet magnétique combiné de la pièce aimantée et de la bobine d'excitation caractérisé en ce que l'organe fixe et l'organe mobile sont reliés par un moyen de liaison mécanique avec frottement de type glissement pur, en ce que ce moyen de liaison est un système, directement intégré dans l'actionneur, d'amortissement mécanique des perturbations extérieures appliquées à la soupape et en ce que ce moyen de liaison présente une caractéristique mécanique de frottement de type collé-glissé dépendante de la position relative des organes mobiles et fixe et du courant circulant dans la bobine.

L'actionneur selon l'invention peut être un actionneur rotatif ou un actionneur linéaire. Dans le premier cas, l'aimant présentera une forme de disque aimanté axialement. Dans le cas d'un actionneur linéaire, l'aimant se présentera sous forme d'un rectangle mince aimanté dans le sens de l'épaisseur.

De préférence, ledit moyen de liaison mécanique avec frottement est constitué par une pièce mince interposée entre ledit organe mobile et ledit organe fixe.

Avantageusement, ledit moyen de liaison mécanique avec frottement présente un frottement statique supérieur au frottement dynamique.

De préférence, ledit moyen de liaison mécanique est configuré pour exercer un couple de frottement supérieur ou égal au couple variable perturbateur maximum perçu par le moteur couple.

Selon un mode de réalisation préféré, ledit moyen de liaison mécanique avec frottement est réalisé en un matériau composite du type métal/polymère.

Avantageusement, ledit moyen de liaison mécanique avec frottement présente une structure comprenant un support rigide en acier revêtu de polytétrafluoréthylène (PTFE) contenant un mélange de fibres.

De préférence, ledit support rigide est fritté avec une couche de bronze poreux, imprégnée et revêtue par une couche de glissement.

Avantageusement, l'actionneur comprend un régulateur qui pilote l'actionneur en boucle fermée qui lui ordonne d'aller légèrement au-delà d'une position cible (réaliser volontairement un dépassement de consigne) pour pouvoir juste après revenir à la position cible dans la direction de la charge lorsque l'actionneur déplace la soupape d'une position d'ouverture à une position de fermeture ; et en ce que le régulateur qui pilote l'actionneur en boucle fermée lui ordonne de se stabiliser légèrement avant cette position cible, en réalisant volontairement un arrêt avant consigne, pour pouvoir juste après atteindre la position cible dans la direction de la charge lorsque l'actionneur déplace la soupape d'une position de fermeture à une position d'ouverture.

## Description détaillée d'un exemple non limitatif de réalisation

L'invention sera mieux comprise à la lecture de la description qui suit, se référant aux figures annexées illustrant un exemple non limitatif de réalisation où :

- les figures 1 et 2 représentent une vue globale d'un turbocompresseur de l'art antérieur

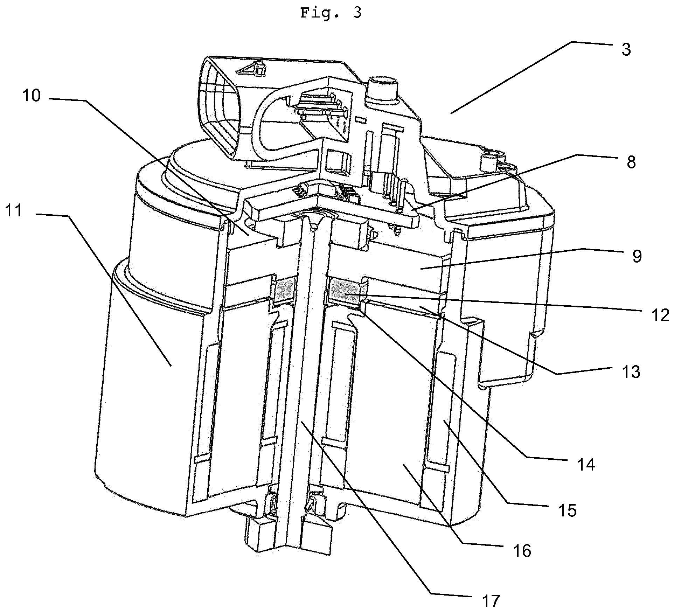

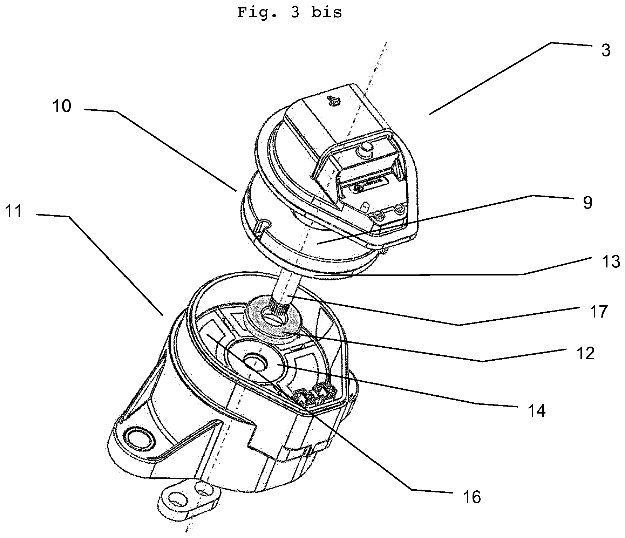

- la figure 3a représente une vue en écorché partiel d'un actionneur selon l'invention
- la figure 3b représente une vue en éclaté d'un actionneur selon l'invention
- la figure 4 représente l'évolution de l'effort axial agissant sur ledit moyen de liaison mécanique avec frottement en fonction de la position angulaire du rotor de l'actionneur et du courant alimentant les bobines d'excitation.
- la figure 5 montre un exemple de mesures de couple en quasi-statique d'un actionneur équipé d'un tel moyen de frottement
- la figure 6 montre la courbe des temps de réponse sous échelon de 12V.
- la figure 7 montre le comportement de l'actionneur avec un régulateur dont la stratégie de pilotage permet une réduction significative du courant consommé lors du maintien en position

L'actionneur (3) comporte de manière connue un stator présentant des dents statoriques (16) dont certaines au moins sont entourées par une bobine (15).

Le rotor (10) est formé par un disque en acier (9), sur lequel est fixé un aimant permanent discal (13). Un circuit imprimé (8) supporte les composants électroniques pour le traitement des signaux provenant du capteur de position indiquant l'angle auquel se trouve le rotor (10). Le stator (11) présente une cavité (14) formé dans un noyau en acier et/ou en plastique, dans laquelle est logée une rondelle de frottement (12) constituant ledit moyen de liaison mécanique avec frottement. Cette rondelle de frottement (12) est engagée entre une surface de frottement (glissement) avec le rotor (10) et une surface de frottement (adhérence) avec le stator (11), les deux organes (stator (11), rotor(10)) étant attirés l'un contre l'autre sous l'effet magnétique combiné de l'aimant moteur permanent (13) fixe avec le rotor (10) et des bobines d'excitation (15) fixes avec le stator (11). Cette rondelle (12) est soumise à des efforts de compression uniaxiale pure.

Habituellement, au lieu d'une telle rondelle (12), on utilise dans l'art antérieur une butée à billes qui reprend les efforts magnétiques axiaux tout en limitant au maximum les pertes par frottement.

Dans l'invention, la rondelle (12) introduit un certain niveau de friction, qui va apporter la raideur manquante aux solutions de l'art antérieur.

On remplace ainsi une liaison de roulement pur par une liaison de glissement pur entre le rotor (10) et le stator (11) de l'actionneur (3).

A titre d'exemple (pour un actionneur sous 3.5A à 25°C), on a pour le début de course un couple moteur de 480mNm pour un effort axial de 90N et on a en fin de course un couple moteur de 310mNm pour un effort axial de 305N. L'effort axial sans courant est de 195N.

Avec une rondelle (12) dont le coefficient de frottement est de l'ordre de 0.075, son diamètre extérieur de 17mm et son diamètre intérieur de 7mm, on établit que :

- la contrainte maximum en fin de course sur la rondelle de frottement (12) est sigma =N/s = 1,8 MPa
- le couple de frottement en début de course est :

$$C = F.R_{moy}.\tan(\alpha) = 37.125 \text{ mNm}$$

- le couple de frottement fin de course est :

$$C = F.R_{moy}.\tan(\alpha) = 125.8 \text{ mNm}$$

- le couple de frottement sans courant est :

$$C = F.R_{moy}.\tan(\alpha) = 80.5 \text{ mNm}$$

Le choix de la matière faisant office de rondelle (12) est important. Elle doit présenter des caractéristiques collé-glissé (« stick-slip ») importantes pour garantir un frottement statique élevé. Le phénomène de collé-glissé (« stick-slip ») désigne un mouvement saccadé observé lors du glissement relatif de deux objets.

Il s'explique par les lois de Coulomb du frottement. Ces lois font intervenir les coefficients de frottement statique ou coefficient d'adhérence (fo) et le coefficient de frottement dynamique ou coefficient de frottement de glissement (f).

Le premier (statique) intervient lorsque la vitesse de glissement entre deux surfaces est nulle : c'est le cas lorsque l'on souhaite déplacer une masse initialement au repos. Le second entre en compte lorsque la vitesse de glissement entre les deux surfaces est non nulle : par exemple quand la masse que l'on pousse est déjà en mouvement.

La force que l'on doit exercer pour déplacer une masse donnée est proportionnelle à cette masse et au coefficient considéré (statique ou dynamique suivant que la masse est, ou non, au repos). Si fo est supérieur à f, comme préconisé pour la présente invention on devra fournir un effort plus important pour déplacer le rotor (10) initialement au repos que pour maintenir son mouvement.

Cette caractéristique permet d'assurer un bon filtrage des perturbations hautes fréquences pour un bon maintien en position ; et un frottement dynamique faible (peu de résistance au mouvement) pour ne pas trop pénaliser les performances de l'actionneur (3) lors des phases de mouvement.

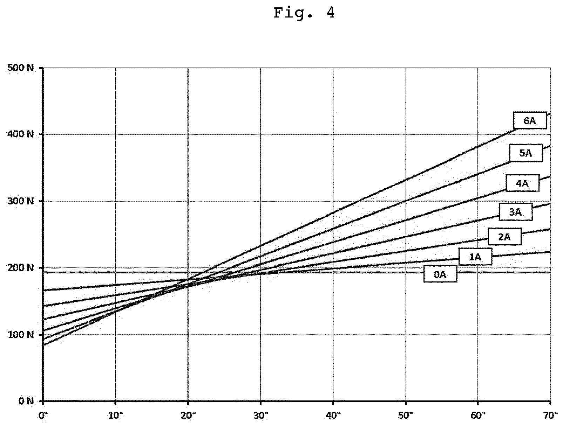

La figure 4 représente l'évolution de l'effort axial sur la course.

L'effort axial étant plus faible en début de course (0°) qu'en fin de course (70°), on obtient l'avantage suivant : quand on souhaite mettre en mouvement le rotor (10) (déplacement du début vers la fin de course), on alimente en courant les bobines d'excitation (15) du stator (11) et on va par conséquent soulager la rondelle de frottement (12) (l'effort axial diminue car le flux magnétique du stator (11) s'oppose à celui de l'aimant moteur (13)) d'où une facilité à initier le mouvement et à passer d'une friction statique élevée à une friction dynamique plus faible, le couple de frottement induit par la rondelle (12) étant directement proportionnel à l'effort axial auquel elle est soumise.

L'élément de frottement (12) peut être constitué par :

-   une rondelle intégralement réalisée en matière plastique

-   une rondelle en acier avec un traitement de surface permettant de contrôler le coefficient de frottement

-   une rondelle composite avec une base support en acier supportant une couche de bronze fritté imprégné recouverte d'une couche de polymère

-   une paire de deux rondelles superposées, en acier, plastique ou acier avec traitement de surface

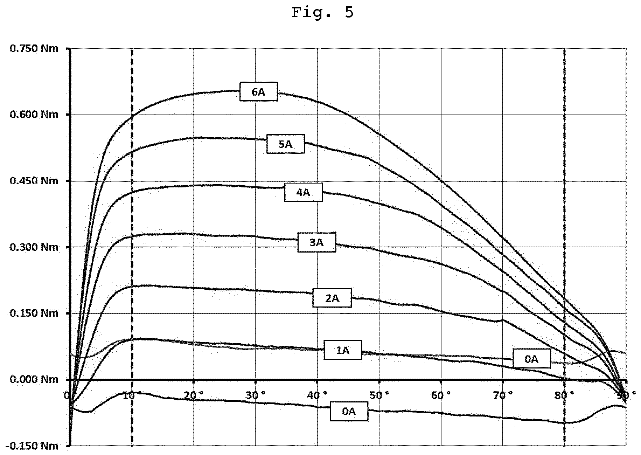

La figure 5 montre un exemple de mesures de couple en quasi-statique d'un actionneur (3) selon l'invention équipé d'un tel moyen de frottement (12).

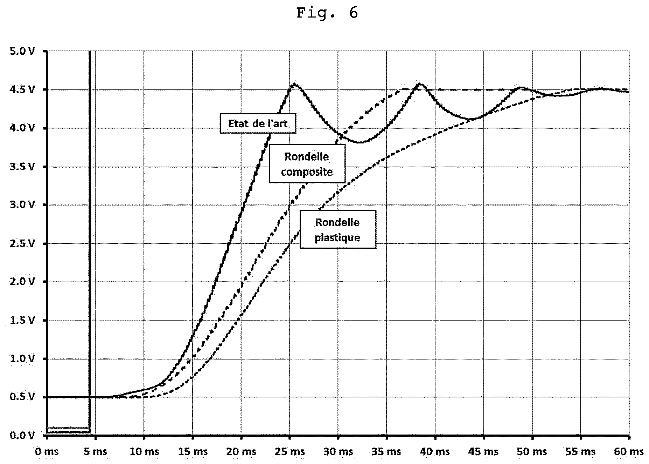

La figure 6 représente l'évolution du temps de réponse en boucle ouverte, pour deux matières de rondelles de frottement (12) et le comportement dynamique pour quantifier l'effet stick-slip, comparativement à l'état de l'art avec un actionneur équipé d'une butée à billes.

Les rondelles de type composite (12) présentent des temps de réponse seulement 1.5 fois plus élevés que la solution état de l'art, restant ainsi compatible avec les besoins de l'application.

Un autre effet important de la solution et constaté sur la figure 6 réside dans l'absence de rebond lors de l'impact en butée fin de course. On tape bien moins fort dans la butée fonctionnelle de l'application (clapet fermé) avec un actionneur (3) équipé d'une rondelle (12) qu'avec un actionneur équipé d'un roulement à billes. L'augmentation de l'effort axial sur la rondelle (12), à l'approche de la fin de course, induit automatiquement une augmentation du couple de friction. En pilotage boucle ouverte, c'est un très bon moyen pour freiner le rotor à l'approche de la fin de la course et réduire ainsi la vitesse d'impact des inerties en mouvement sur les butées de l'application. On préserve ainsi l'intégrité du système piloté par l'actionneur sans avoir recours à des stratégies complexes de type « soft landing ».

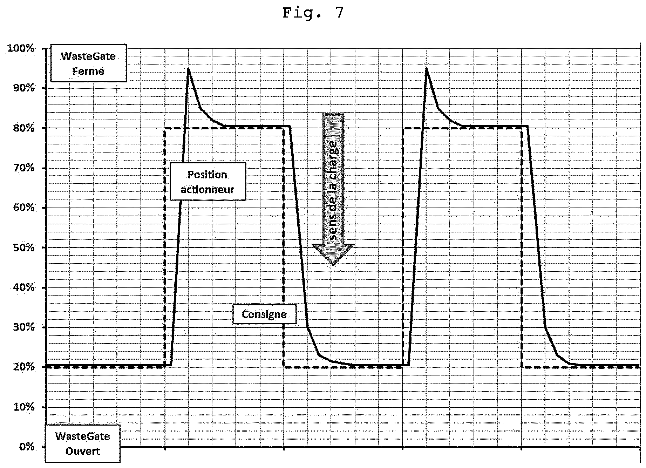

Une stratégie de pilotage de l'actionneur (3) particulière en boucle fermée décrite sur la figure 7, avec accostage toujours dans le sens de la charge, donc dans le sens de l'ouverture, permet d'améliorer encore les performances. On s'assure ainsi d'avoir toujours le couple de friction induit par la rondelle de frottement (12) dirigé pour aider (et non s'opposer) à l'actionneur (3). Avec ce mode de pilotage, on réduit considérablement le courant consommé par les bobines (15) du stator (11) pour maintenir en position le rotor (10). On adapte le software du régulateur contrôlant le positionnement de l'actionneur (3) pour que chaque accostage en position fixe s'effectue dans la direction de la charge. Les soupapes de décharge pour turbocompresseurs s'opposant toujours au flux des gaz sortant de la chambre de combustion, la charge perçue est toujours orienté dans le même sens, à savoir vers l'ouverture. Ainsi lorsque l'actionneur (3) déplace l'élément mobile (5) du turbocompresseur au travers de la cinématique (4) d'une position d'ouverture à une position de fermeture, le régulateur ordonne à l'actionneur (3) d'aller légèrement au-delà de la position cible (réaliser volontairement un overshoot / dépassement de consigne) pour pouvoir juste après revenir à la position cible dans la direction de la charge (supprimer l'overshoot) et bénéficier ainsi de la friction introduite par la rondelle (12) pour réduire le courant consommé par les bobines (15) du stator (11) pour maintenir en position le rotor (10). Lorsque l'actionneur déplace l'élément mobile (5) du turbocompresseur au travers de la cinématique (4) d'une position de fermeture à une position d'ouverture, le régulateur ordonne à l'actionneur (3) de se stabiliser légèrement avant cette position cible (réaliser volontairement un undershoot / arrêt avant consigne) pour pouvoir juste après atteindre la position cible dans la direction de la charge (supprimer l'undershoot) et bénéficier ainsi de la friction introduite par la rondelle (12) pour réduire le courant consommé par les bobines (15) du stator (11) pour maintenir en position le rotor (10).

## Revendications

1.  Système comprenant un actionneur électromagnétique et une soupape de décharge, ledit actionneur électromagnétique destiné notamment au pilotage d'une soupape de décharge pour turbocompresseur (5), ledit actionneur (3) comportant un organe fixe (11) formé d'un premier circuit magnétique statorique (16) réalisé en un matériau de haute perméabilité magnétique excité par au moins une bobine d'excitation (15), et un organe mobile (10) constitué par une pièce mince aimantée (13), ledit organe mobile (10) étant muni d'un axe d'accouplement (17), lesdits organes fixe (11) et mobile (10) étant attirés l'un contre l'autre sous l'effet magnétique combiné de la pièce aimantée (13) et de la bobine d'excitation (15) et étant reliés par un moyen de liaison mécanique avec frottement de type glissement pur **caractérisé en ce que** ladite pièce mince aimantée est accolée à un second circuit magnétique réalisé en un matériau de haute perméabilité magnétique, **en ce que** ce moyen de liaison est un système, directement intégré dans 1'actionneur, d'amortissement mécanique des perturbations extérieures appliquées à la soupape et **en ce que** ce moyen de liaison présente une caractéristique mécanique de frottement de type colléglissé dépendante de la position relative des organes mobiles (10) et fixe (10) et du courant circulant dans la bobine (15).

2. Système selon la revendication 1 **caractérisé en ce que** ledit moyen de liaison mécanique avec frottement (12) est constitué par une lame interposée entre ledit organe mobile (10) et ledit organe fixe (11).

3. Système selon la revendication 1 **caractérisé en ce que** ledit moyen de liaison mécanique avec frottement (12) est constitué par une paire de deux lames superposées.

4. Système selon la revendication 1 **caractérisé en ce que** ladite pièce mince aimantée (13) est constituée par un disque aimanté et **en ce que** ledit actionneur (3) est un actionneur rotatif.

5. Système selon la revendication 1 **caractérisé en ce que** ladite pièce mince aimantée (13) est constituée par un aimant rectangulaire aimanté dans le sens de l'épaisseur et **en ce que** ledit actionneur (3) est un actionneur linéaire.

6. Système selon la revendication 2 ou 3 **caractérisé en ce que** lesdites lames interposées (12) sont constituées par des rondelles de frottement.

7. Système selon l'une quelconque des revendications 1 à 3 **caractérisé en ce que** ledit moyen de liaison mécanique avec frottement (12) présente un frottement statique supérieur au frottement dynamique.

8. Système selon l'une au moins des revendications précédentes **caractérisé en ce que** ledit moyen de liaison mécanique avec frottement (12) est configuré pour exercer un couple de frottement supérieur ou égal au couple variable perturbateur maximum perçu par l'actionneur (3).

9. Système selon la revendication 2 ou 3 **caractérisé en ce que** ledit moyen de liaison mécanique avec frottement (12) est réalisé en un matériau composite du type métal/polymère.

10. Système selon la revendication précédente **caractérisé en ce que** ledit moyen de liaison mécanique avec frottement (12) présente une structure comprenant un support rigide en acier revêtu de polytétrafluoréthylène (PTFE) contenant un mélange de fibres.

11. Système selon la revendication précédente **caractérisé en ce que** ledit support rigide est fritté avec une couche de bronze poreux, imprégnée et revêtue par une couche de glissement.

12. Système selon la revendication 8 **caractérisé en ce que** ledit moyen de liaison avec frottement (12) est réalisé intégralement en matière plastique.

13. Système selon l'une au moins des revendications précédentes **caractérisé en ce qu'**il comprend un régulateur qui pilote l'actionneur (3) en boucle fermée qui lui ordonne d'aller légèrement au-delà d'une position cible (réaliser volontairement un dépassement de consigne) pour pouvoir juste après revenir à la position cible dans la direction de la charge lorsque l'actionneur (3) déplace la soupape d'une position d'ouverture à une position de fermeture ; et **en ce que** le régulateur qui pilote l'actionneur (3) en boucle fermée lui ordonne de se stabiliser légèrement avant cette position cible, en réalisant volontairement un arrêt avant consigne, pour pouvoir juste après atteindre la position cible dans la direction de la charge lorsque l'actionneur (3) déplace la soupape d'une position de fermeture à une position d'ouverture.

**Patentansprüche**

1. System, welches ein elektromagnetisches Stellglied und einen Entladungsventil umfasst, wobei besagtes elektromagnetisches Stellglied insbesondere zur Steuerung eines Entladungsventils für einen Turbokompressor (5) bestimmt ist, wobei besagtes Stellglied (3) ein feststehendes Element (11) umfasst, welches gebildet wird aus einem ersten Stator-Magnetkreis (16), der hergestellt ist aus einem hochdurchlässigen magnetischen Material, das durch zumindest eine Erregerspule (15) erregt wird, und ein bewegliches Element (10), welches aus einem dünnen magnetisierten Teil (13) besteht, wobei besagtes bewegliches Element (10) mit einer Verbindungsachse (17) versehen ist, wobei das besagte feststehende Element (11) und das besagte bewegliche Element (10) unter der kombinierten magnetischen Wirkung des magnetisierten Teils (13) und der Erregerspule (15) gegenseitig angezogen werden und über ein mechanisches reibschlüssiges Verbindungsmittel allein durch Gleiten miteinander verbunden sind, **dadurch gekennzeichnet, dass** besagtes dünnes magnetisiertes Teil an einen zweiten Magnetkreis anliegt, der aus einem hochdurchlässigen magnetischen Material besteht, **dadurch gekennzeichnet, dass** dieses Verbindungsmittel ein direkt in das Stellglied eingebautes System zur mechanischen Dämpfung der auf das Ventil einwirkenden äußeren Störeinflüsse ist und dadurch, dass dieses Verbindungsmittel eine mechanische haftgleitende Reibungskennlinie aufweist, die abhängig ist von der relativen Position des beweglichen (10) und des feststehenden (10) Elements und dem durch die Spule (15) strömenden Strom.

2. System nach Anspruch 1, **dadurch gekennzeichnet, dass** besagtes mechanisches reibschlüssiges Verbindungsmittel (12) gebildet wird aus einer Platte, die zwischen besagtem beweglichen Element (10) und besagtem feststehenden Element (11) angeordnet ist.

3. System nach Anspruch 1, **dadurch gekennzeichnet, dass** besagtes mechanisches reibschlüssiges Verbindungsmittel (12) gebildet wird durch zwei übereinander gelagerte Platten.

4. System nach Anspruch 1, **dadurch gekennzeichnet, dass** besagtes dünnes magnetisiertes Teil (13) aus einer magnetisierten Scheibe besteht, und dadurch, dass besagtes Stellglied (3) ein drehbares Stellglied ist.

5. System nach Anspruch 1, **dadurch gekennzeichnet, dass** besagtes dünnes magnetisiertes Teil (13) aus einem rechteckigen Magneten besteht, der in Richtung der Dicke magnetisiert ist, und dadurch, dass besagtes Stellglied (3) ein lineares Stellglied ist.

6. System nach Anspruch 2 oder 3, **dadurch gekennzeichnet, dass** besagte übereinander gelagerte Platten (12) aus Reibscheiben bestehen.

7. System nach einem der Ansprüche 1 bis 3, **dadurch gekennzeichnet, dass** besagtes mechanisches reibschlüssiges Verbindungsmittel (12) eine Haftreibung aufweist, die größer ist als die Gleitreibung.

8. System nach zumindest einen der vorhergehenden Ansprüche, **dadurch gekennzeichnet, dass** besagtes mechanisches reibschlüssiges Verbindungsmittel (12) so ausgebildet ist, dass es ein Reibungsmoment größer/gleich dem vom Stellglied (3) erkannten, maximalen veränderlichen Störmoment ausübt.

9. System nach Anspruch 2 oder 3, **dadurch gekennzeichnet, dass** besagtes mechanisches reibschlüssiges Verbindungsmittel (12) hergestellt wird aus Metall/Polymer-Verbundmaterial.

10. System nach dem vorhergehenden Anspruch, **dadurch gekennzeichnet, dass** besagtes mechanisches reibschlüssiges Verbindungsmittel (12) eine Struktur aufweist, die einen steifen Träger aus Stahl, beschichtet mit Polytetrafluorethylen (PTFE) umfasst, der eine Fasermischung enthält.

11. System nach dem vorhergehenden Anspruch, **dadurch gekennzeichnet, dass** besagter steifer Träger mit einer porösen Bronzeschicht gesintert und mit einer Gleitschicht imprägniert und beschichtet wird.

12. System nach Anspruch 8, **dadurch gekennzeichnet, dass** besagtes reibschlüssiges Verbindungsmittel (12) komplett aus Kunststoff hergestellt wird.

13. System nach mindestens einem der vorhergehenden Ansprüche, **dadurch gekennzeichnet, dass** es einen Regler umfasst, der das Stellglied (3) in einem geschlossenen Kreislauf steuert und dieses anweist, ein wenig über die Zielposition hinaus zu gehen (absichtlich einen Sollwert zu überschreiten), um direkt danach in Ladungsrichtung zur Zielposition zurückzukehren, wenn das Stellglied (3) das Ventil von einer Öffnungsposition zu einer Schließposition verschiebt; **dadurch gekennzeichnet, dass** der Regler, der das Stellglied (3) in einem geschlossenen Kreislauf steuert, dieses anweist, sich kurz vor dieser Zielposition zu stabilisieren, indem er absichtlich vor dem Sollwert stoppt, um direkt danach die Zielposition in Ladungsrichtung einzunehmen, wenn das Stellglied (3) das Ventil von einer Schließposition in eine Öffnungsposition verschiebt.

**Claims**

1. A system comprising an electromagnetic actuator and a waste gate, with said electromagnetic actuator being specifically intended for controlling a waste gate of a turbocharger (5), with said actuator (3) comprising a stationary member (11) consisting of a first magnetic stator circuit (16) made of a high magnetic permeability material excited by at least one trip coil (15), and a moving member (10) consisting of a magnetized thin part (13), said moving member (10) being provided with a coupling pin (17), with said stationary (11) and moving (10) members being attracted towards each other because of the combined magnetic effect of the magnetized part (13) and the trip coil (15) and being connected through means for mechanical connection with friction of the pure sliding type, **characterized in that** said magnetized thin part is adjacent to a second magnetic circuit made of a high magnetic permeability material, **in that** such connecting means is a system, directly integrated in the actuator, for mechanically damping the external disturbances applied to the valve and **in that** said connecting means has a mechanical characteristic of the pasted-dragged type of friction dependent on the relative position of the moving (10) and stationary (10) members and on the current flowing in the coil (15).

2. A system according to claim 1, **characterized in that** said means for the mechanical connection with friction (12) consists of a blade interposed between said moving member (10) and said stationary member (11).

3. A system according to claim 1, **characterized in that** said means for the mechanical connection with friction (12) consists of a pair of two stacked blades.

4. A system according to claim 1, **characterized in that** said magnetized thin part (13) consists of a magnetized disc and **in that** said actuator (3) is a rotating actuator.

5. A system according to claim 1, **characterized in that** said magnetized thin part (13) consists of a rectangular magnet magnetized in the thickness direction and **in that** said actuator (3) is a linear actuator.

6. A system according to claim 2 or 3, **characterized in that** said interposed blades (12) consist of friction rings.

7. A system according to any one of claims 1 to 3, **characterized in that** said means for the mechanical connection with friction (12) has a static friction higher than the dynamic friction.

8. A system according to at least one of the preceding claims, **characterized in that** said means for the mechanical connection with friction (12) is so configured as to exert a friction torque greater than or equal to the maximum variable disturbance torque perceived by the actuator (3).

9. A system according to claim 2 or 3, **characterized in that** said means for the mechanical connection with friction (12) is made of a composite material of the metal/polymer type.

10. A system according to the preceding claim, **characterized in that** said means for the mechanical connection with friction (12) has a structure comprising a rigid steel support coated with polytetrafluoroethylene (PTFE) containing a mixture of fibers.

11. A system according to the preceding claim, **characterized in that** said rigid support is sintered with a porous bronze layer impregnated and coated with a sliding layer.

12. A system according to claim 8, **characterized in that** said means for the mechanical connection with friction (12) is totally made of plastic.

13. A system according to at least one of the preceding claims, **characterized in that** it comprises a controller which provides the closed-loop control of the actuator (3) and directs it to go slightly beyond a target position (to deliberately go beyond the set point) so as to be able to return, right after that, to the target position in the direction of the load when the actuator (3) moves the valve from an open position to a closed position;

and **in that** the controller which provides the closed-loop control of the actuator (3) directs it to stabilize slightly before the target position, by deliberately stopping before the set point, so as to be able to reach, right after that, the target position in the direction of the load when the actuator (3) moves the valve from a closed position to an open position.

Fig. 1

Fig. 2

Fig. 3

Fig. 3 bis

Fig. 4

## Fig. 5

Fig. 6

Fig. 7

## RÉFÉRENCES CITÉES DANS LA DESCRIPTION

**Documents brevets cités dans la description**

- DE 102011051560
- WO 2013017794 A
- DE 102011078907
- EP 1804366 A
- US 5828151 A
- US 2006244330 A
- US 2011240893 A
- EP 1432106 A
- US 3242365 A